# EUROPÄISCHE PATENTSCHRIFT

(11) **EP 3 868 543 B1**
(45) Veröffentlichungstag und Bekanntmachung des Hinweises auf die Patenterteilung: **16.08.2023**
(21) Anmeldenummer: 20158507.2
(22) Anmeldetag: 20.02.2020
(51) Int. Cl.: B29C 51/12, B29C 51/20, B29C 51/08, B29C 51/10, B29C 51/14, B29C 51/34, B29C 51/26

(54) **VERFAHREN ZUR HERSTELLUNG EINER HALBSCHALE**
METHOD FOR MANUFACTURING A HALF SHELL
PROCÉDÉ DE FABRICATION D'UN DEMI-COQUE

(43) Veröffentlichungstag der Anmeldung: 25.08.2021
(73) Patentinhaber: Magna Energy Storage Systems GesmbH, 8261 Sinabelkirchen (AT)
(72) Erfinder: PUNTIGAM, David, 8522 Gross St.Florian (AT); DREBES, Mario, 92369 Sengenthal (DE); PREITLER, Andreas, 8101 Gratkorn (AT); PUCHLEITNER, Rainer, 8052 Graz (AT)
(74) Vertreter: Zangger, Bernd

(56) Entgegenhaltungen:
- WO-A1-2018/225413
- US-A1- 2012 205 337

## Beschreibung

### Gebiet der Erfindung

Die vorliegende Erfindung betrifft ein Verfahren zur Herstellung einer Halbschale für einen Hochdruckbehälter und ein Verfahren zur Herstellung eines Hochdruckbehälters.

### Stand der Technik

Es ist bekannt das Hochdruckbehälter, beispielsweise zum Speichern von Wasserstoff als Kraftstoff für Kraftfahrzeuge, aus einer innenliegenden Schicht, dem sogenannten "Liner", und einer Wicklung von Fasermaterial um den Liner herum aufgebaut werden können.

Zur Herstellung eines Behälters ist es bekannt, die Technologien des Blasformens und Thermoformens einzusetzen. Die Herstellung beruht dann auf der Umformung von schlauch- oder plattenförmigen Halbzeugen. Diese werden durch Unterdruck und/oder Überdruck in ihre finale Form gebracht. Beispielsweise können zwei Halbschalen erzeugt werden, die aneinander gefügt werden, um einen Behälter zu bilden.

Für den Anwendungsfall von gasdichten Linern für Typ IV Behälter, die zur Druckspeicherung von Gasen eingesetzt werden, gibt es zwei gängige Produktionsmethoden. Zum einen das Blasformen von ganzen Linern, zum anderen die Methode der Herstellung von Segmenten des Behälters im Spritzguss und Extrusionsverfahren sowie eine nachgeschaltete Verbindung dieser Komponenten durch ein Fügeverfahren.

Die hierbei zum Einsatz kommenden Werkstoffe sind zumeist auf Basis von HDPE (High Density Polyethylen) oder Polyamiden.

Ein wichtiges Unterscheidungsmerkmal für Linerwerkstoffe sind die mechanischen Tieftemperatureigenschaften sowie die Emissionseigenschaften. Monolayermaterialien wie Polyamid verfügen über eine gute Sperreigenschaft für Gase, jedoch nicht über optimale Tieftemperatureigenschaften. HDPE hingegen verfügt über keine geeignete Sperrwirkung, jedoch über sehr gute Tieftemperatureigenschaften.

Speziell für Anwendungen im Bereich Wasserstoff kommt aus diesem Grund aktuell hauptsächlich Polyamid zum Einsatz. Jedoch sind dadurch vor allem für Blasformtechnologie Grenzen im Hinblick auf Bauteilgröße gesetzt. Die verfügbaren geeigneten Typen sind auf Grund ihrer aufwändigen Additivierung überdies teuer und problematisch beim Einsatz bei tiefen Temperaturen.

Hochdruckbehälter für Gase unterliegen im Zuge ihres Betriebs (Befüllen, Speichern und Entleeren) großen Temperaturschwankungen. Dies stellt hohe Anforderungen an die Materialien und im Speziellen an den Liner dar.

In Verbindung mit der Leichtbauweise und der Verwendung von Verbundwerkstoffen stellt sich in diesem Zusammenhang die Herausforderung die unterschiedlichen Materialien an der Fügestelle gasdicht miteinander zu verbinden.

Die WO 2018/225413 A1 offenbart eine Vorrichtung zur Herstellung eines Kraftstofftanks, der eingebaute Teile enthält, die eine Schulter, einen Hals und einen Kopf aufweisen. Dabei erfolgt ein Beaufschlagen mit einem ersten Überdruck von der Innenseite eines Vorformlings. Die Vorrichtung umfasst eine Aussparung und ein zweites Überdruckmittel, um den Vorformling in der Aussparung entlang des Halses zu formen, indem ein zweiter Überdruck von der Außenseite des Vorformlings in der Aussparung angelegt wird.

Aus der US 2012/205337 A1 ist ein Druckbehälter zur Speicherung von flüssigen oder gasförmigen Medien bekannt, umfassend einen Kunststoffinnenbehälter mit wenigstens einem nicht einstückig mit diesem verbundenen Halsstück, welches an dem Behälterhals im Bereich einer Behälteröffnung angeordnet ist, sowie mit einer den Kunststoffinnenbehälter und das Halsstück zumindest teilweise umschließenden Stützhülle, wobei das Halsstück mit Mitteln zur Aufnahme einer Anschlussarmatur versehen ist, umfassend wenigstens einen Einsatz, welcher wenigstens einen Teil des Behälterhalses bildet und welcher einen Dichtsitz für die in das Halsstück einzusetzende Armatur bildet.

### Zusammenfassung der Erfindung

Es ist eine Aufgabe der Erfindung, die Herstellung von Hochdruckbehältern in dieser Hinsicht zu verbessern und insbesondere ein Verfahren zur Herstellung einer Halbschale für einen Hochdruckbehälter und ein Verfahren zur Herstellung eines Hochdruckbehälters anzugeben, das einfach und kostengünstig durchgeführt werden kann und das es ermöglicht, die Anforderungen an Dichtheit und Permeation für einen Hochdruckbehälter zu erfüllen.

Die Lösung der Aufgabe erfolgt durch ein Verfahren zur Herstellung einer Halbschale für einen Hochdruckbehälter, wobei die Halbschale einen Einlegeteil umfasst, mit den Merkmalen gemäß Anspruch 1.

Dabei wird ein Werkzeug verwendet mit einer ersten Werkzeughälfte die eine Matrize bildet, umfassend die Schritte:
- eine vorgeheizte erste Kunststoffplatte wird auf die erste Werkzeughälfte gelegt,
- die erste Kunststoffplatte wird mittels Unterdruck oder Druck an die erste Werkzeughälfte gesaugt oder gepresst,
- hierdurch wird der Kunststoff der ersten Kunststoffplatte bereichsweise hinter einer Hinterschneidung des Einlegeteils seitlich beabstandet vom Einlegeteil angeordnet, oder das Einlegeteil wird, nach dem Saugen oder Pressen der ersten Kunststoffplatte an die erste Werkzeughälfte, so positioniert, dass Kunststoff der ersten Kunststoffplatte bereichsweise hinter einer Hinterschneidung des Einlegeteils seitlich beabstandet vom Einlegeteil angeordnet ist,
- danach wird mittels eines Schiebers oder eines Unterdrucks oder eines Drucks der Kunststoff der ersten Kunststoffplatte hinter der Hinterschneidung von seitlich beabstandet des Einlegeteils an das Einlegeteil gedrückt oder gesaugt, so dass ein Raum hinter der Hinterschneidung des Einlegeteils mit dem Kunststoff gefüllt wird.

Erfindungsgemäß wird das Einlegeteil, nach dem Saugen oder Pressen der ersten Kunststoffplatte an die erste Werkzeughälfte, in Relation zur ersten Werkzeughälfte angehoben, um das Einlegeteil so zu positionieren, dass Kunststoff der ersten Kunststoffplatte hinter der Hinterschneidung seitlich beabstandet vom Einlegeteil angeordnet wird. Das Anheben kann mit Hilfe einer beweglichen Aufnahme für das Einlegeteil erfolgen. Das Einlegeteil kann dabei behälteraußenseitig an der ersten Kunststoffplatte angeordnet sein und das Anheben kann somit entlang der Längsmittelachse des Einlegeteils und bevorzugt auch entlang der Längsmittelachse des Hochdruckbehälters erfolgen, insbesondere in Richtung zum späteren Zentrum des Behälters hin.

Erfindungsgemäß wird das Einlegeteil nach dem Füllen des Raums hinter der Hinterschneidung des Einlegeteils mit dem Kunststoff wieder abgesenkt, in Relation zur ersten Werkzeughälfte. Bevorzugt erfolgt das Absenken gleichzeitig mit dem Verfahren der zweiten Werkzeughälfte auf die erste Werkzeughälfte.

Erfindungsgemäß wird ein Einlegeteil, bevorzugt aus Metall oder aus Kunststoff, besonders bevorzugt ein sogenanntes Bossteil eines Hochdruckbehälters, dicht in einen Kunststoff eingebettet, indem eine Hinterschneidung des Einlegeteils in einem zusätzlichen Schritt zur Ausformung der Halbschale mit dem Kunststoff der Halbschale ausgefüllt wird.

Hierfür wird ein Einlegeteil, insbesondere ein Bossteil, in das Werkzeug eingelegt und in einem Blas- oder Tiefziehvorgang mit der Kunststoffplatte, insbesondere einem permeationsdichten Mehrschichtverbund, umschlossen, sodass der Kunststoff auch in Bereiche hinter einer Hinterschneidung gelangt. Dazu wird zunächst eine Kunststoffplatte mittels Unterdruck oder Druck an die erste Werkzeughälfte gesaugt oder gepresst.

Erst nach dem Saugen oder Pressen des Kunststoffs an die erste Werkzeughälfte wird das Einlegeteil so positioniert, dass Kunststoff der ersten Kunststoffplatte hinter der Hinterschneidung seitlich beabstandet vom Einlegeteil angeordnet wird..

Danach wird mittels eines Schiebers oder eines Unterdrucks oder eines Drucks der Kunststoff der ersten Kunststoffplatte von seitlich des Einlegeteils an das Einlegeteil heran gedrückt oder gesaugt, so dass ein Raum hinter der Hinterschneidung des Einlegeteils mit dem zuvor seitlich befindlichen Kunststoff gefüllt wird und ein Formschluss entsteht.

Dadurch gelangt der Kunststoff, trotz einfacher Herstellung mittels Blasformen bzw. Vakuumformen, auch in Bereiche hinter dem Einlegeteil und es ergibt sich eine verbesserte dichtende Wirkung des Kunststoffes, insbesondere Mehrschichtverbundes, zum Einlegeteil, insbesondere zum metallischen Bossteil, hin. Um den Einschluss in den Kunststoff zu erreichen werden Schieber und/oder ein Vakuum bzw. Druckluft verwendet.

"Seitlich beabstandet" bedeutet dabei im Wesentlichen beabstandet von einer Längsmittelachse des Einlegeteils, die bevorzugt auch mit der Längsmittelachse des Druckbehälters zusammen fallen kann. Der Kunststoff kann zunächst im Wesentlichen parallel zur Längsmittelachse des Einlegeteils und bevorzugt auch zur umgebenden Behälterwand verlaufen. Der Kunststoff wird dann im Wesentlichen normal auf die Längsmittelachse des Einlegeteils, insbesondere allseitig radial nach innen, zum Einlegeteil hin, gesaugt, geblasen oder geschoben.

Dass das Saugen oder Drücken des Kunststoffs an das Einlegeteil heran zeitlich nach dem Positionieren des Einlegeteils, so dass der Kunststoff bereichsweise seitlich beabstandet vom Einlegeteil angeordnet ist, erfolgt, kann auch in einem kontinuierlichen Prozess erfolgen, so dass jeweils das Einlegeteil weiter bewegt und positioniert wird und dabei jeweils weiter neu Kunststoff herangesaugt oder gedrückt wird, so dass die Positionierung des Einlegeteils und das Heransaugen oder Drücken des Kunststoffs hinter die Hinterschneidung quasi gleichzeitig erfolgt.

Die so entstehende Halbschale kann in einem weiteren Prozessschritt mit einer zweiten Halbschale oder einem extrudierten oder blasgeformten Mehrschichtzylinder verbunden werden. Dies bildet den Kern und somit die Basis für einen weiteren Wickelprozess, in dem der Behälter seine mechanische Festigkeit durch einen Verbundwerkstoff aus Kohle und/oder Glas und Epoxidharz erhalten kann.

Die Vorliegende Erfindung kann somit Vorteile der Spritzgusstechnologie hinsichtlich der Herstellung einer formschlüssigen Verbdingung von metallischen Einlegeteilen, insbesondere Bossteilen, zum Kunststoffliner mit Vorteilen der Blasform- oder Tiefziehtechnologie hinsichtlich der Einsetzbarkeit von Mehrschichtwerkstoffen verbinden.

Weiterbildungen der Erfindung sind in den abhängigen Ansprüchen, der Beschreibung sowie den beigefügten Zeichnungen angegeben.

Vorzugsweise umfasst das Werkzeug eine zweite Werkzeughälfte, die einen Stempel bildet, wobei die zweiten Werkzeughälfte auf die erste Werkzeughälfte gefahren wird um die innere Kontur der Halbschale auszubilden. Die zweite Werkzeughälfte kann dazu die Form der ersten Kunststoffplatte im Inneren der Halbschale ausformen. Die zweite Werkzeughälfte kann stattdessen auch mit einer zweiten Kunststoffplatte bestückt sein, die die innere Kontur der Halbschale ausbildet.

Gemäß einer anderen Ausführungsform wird das Einlegeteil erst nach dem Saugen oder Pressen der ersten Kunststoffplatte an die erste Werkzeughälfte auf die erste Kunststoffplatte gelegt, um das Einlegeteil so zu positionieren, dass Kunststoff der ersten Kunststoffplatte hinter der Hinterschneidung seitlich beabstandet vom Einlegeteil angeordnet wird. Das Einlegeteil kann somit behälterinnenseitig an der ersten Kunststoffplatte angeordnet sein. Eine zweite Kunststoffplatte kann wiederum behälterinnenseitig des Einlegeteils angeordnet werden.

Der Kunststoff der ersten Kunststoffplatte kann axial hinter dem mit Kunststoff gefüllten Raum hinter der Hinterschneidung, abgeschnitten werden, so dass hinter der Hinterschneidung, insbesondere behälteraußenseitig der Hinterschneidung, kein Kunststoff mehr vorliegt.

Bevorzugt wird eine vorgeheizte zweite Kunststoffplatte auf die zweite Werkzeughälfte gelegt, danach die zweite Kunststoffplatte mittels Unterdruck oder Druck an die zweite Werkzeughälfte gesaugt oder gepresst, und die zweite Werkzeughälfte mit der zweiten Kunststoffplatte auf die erste Werkzeughälfte gefahren, um die innere Kontur der Halbschale auszubilden.

Bevorzugt ist die erste Kunststoffplatte ein Mehrschichtverbund, wobei der Mehrschichtverbund bevorzugt eine Schicht aus HDPE (High Density Polyethylen) und eine Barriereschicht, insbesondere EVOH (EthylenVinylalkohol-Copolymer), umfasst. Besonders bevorzugt umfasst der Mehrschichtverbund auch ein Regrindmaterial bzw. Regranulat und/oder ein oder mehrere Haftvermittlerschichten. HDPE bildet bevorzugt die äußerste Schicht des Mehrschichtverbundes und kann zusätzlich auch die innerste Schicht bilden.

Ein Verfahren zur Herstellung eines Hochdruckbehälters umfasst erfindungsgemäß, dass eine Halbschale hergestellt wird durch ein Verfahren wie zuvor beschrieben, wobei die Halbschale mit einer weiteren Halbschale - die beispielsweise ebenfalls ein Einlegeteil umfassen kann und die auf die selbe zuvor beschriebene Art hergestellt sein kann - oder mit mindestens einem - bevorzugt extrudierten oder blasgeformten - Zylinder und einer Endkappe verbunden wird, um einen geschlossenen Behälter zu bilden.

Der geschlossene Behälter wird vorzugsweise mit einem Fasermaterial umwickelt, bevorzugt mit einem Verbundwerkstoff umfassend Kohlefasern und/oder Glasfasern und/oder Epoxidharz.

### Kurzbeschreibung der Zeichnungen

Die Erfindung wird im Folgenden beispielhaft unter Bezugnahme auf die Zeichnungen beschrieben.
- Fig. 1 - Fig. 6: sind Schnittansichten die Schritte eines erfindungsgemäßen Verfahrens zur Herstellung einer Halbschale in einer ersten Ausführungsform zeigen.

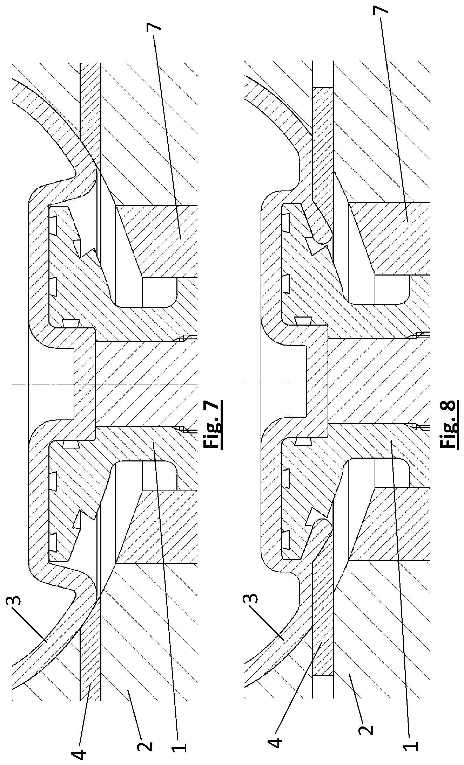

- Fig. 7: ist eine Detaildarstellung der Fig. 3 im Bereich um die Hinterschneidung des Einlegeteils 1.
- Fig. 8: ist eine Detaildarstellung der Fig. 4 im Bereich um die Hinterschneidung des Einlegeteils 1.
- Fig. 9 - Fig. 14: sind Schnittansichten die Schritte eines erfindungsgemäßen Verfahrens zur Herstellung einer Halbschale in einer zweiten Ausführungsform zeigen.

### Detaillierte Beschreibung der Erfindung

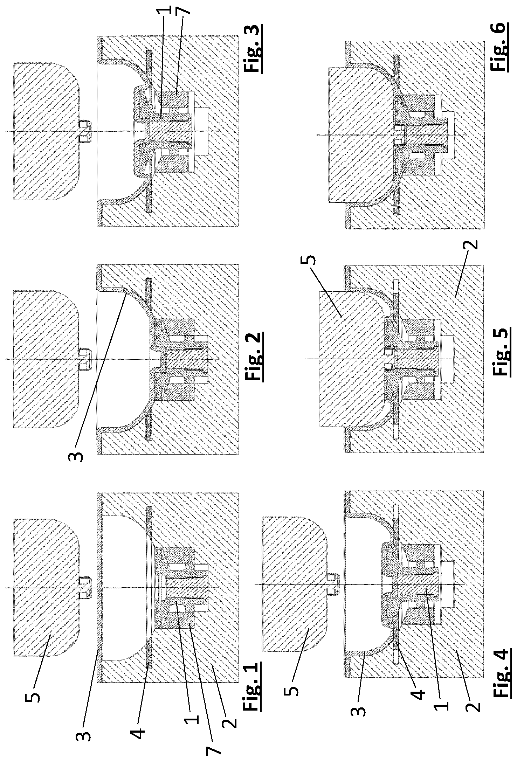

In den Fig. 1-6 ist ein erfindungsgemäßes Verfahren zur Herstellung einer Halbschale für einen Hochdruckbehälter dargestellt.

Es wird ein Werkzeug verwendet mit einer ersten Werkzeughälfte 2, die eine Matrize bildet, und mit einer zweiten Werkzeughälfte 5, die einen Stempel bildet.

Das Werkzeug besteht somit aus zwei Werkzeughälften wobei in der ersten Werkzeughälfte 2, bevorzugt der unteren Werkzeughälfte, das Einlegeteil auf einer beweglichen Aufnahme 7 positioniert wird. Die zweite Werkzeughälfte 5, bevorzugt die obere Werkzeughälfte, fungiert als Stempel, um am Ende des Prozesses eine Verpressung aufzubringen. Zusätzlich kann die zweite Werkzeughälfte 5 auch mit einem zweiten Einlegeteil bestückt werden. Mit Hilfe von im Werkzeug vorgesehenen Schiebern 4 und/oder Vakuum wird der Kunststoff an die für den Formschluss notwendigen Stellen gebracht.

Dazu wird eine vorgeheizte erste Kunststoffplatte 3 auf die erste Werkzeughälfte 2 gelegt und die erste Kunststoffplatte 3 mittels Unterdruck oder Druck an die erste Werkzeughälfte 2 gesaugt oder gepresst. Danach wird das Einlegeteil 1 so positioniert, dass Kunststoff der ersten Kunststoffplatte 3 bereichsweise hinter einer Hinterschneidung, seitlich beabstandet vom Einlegeteil 1, angeordnet ist.

Dann wird mittels eines Schiebers 4 oder eines Unterdrucks oder eines Drucks der Kunststoff der ersten Kunststoffplatte 3 hinter der Hinterschneidung von seitlich beabstandet des Einlegeteils 1 an das Einlegeteil 1 gedrückt oder gesaugt, so dass ein Raum hinter der Hinterschneidung des Einlegeteils 1 mit dem Kunststoff gefüllt wird.

Schließlich wird die zweiten Werkzeughälfte 5 auf die erste Werkzeughälfte 2 gefahren, um die innere Kontur der Halbschale auszubilden.

Das in den Fig. 1 bis 6 dargestellt Singlesheet-Verfahren zeigt im Einzelnen folgende Schritte:
Im ersten Schritt des Singlesheet-Verfahrens (Fig. 1) wird die eine Werkzeughälfte, nämlich die erste Werkzeughälfte 2, mit dem Einlegeteil 1 - nämlich einem Bossteil - und einer vorgeheizten Kunststoffplatte 3 bestückt. Das Einlegeteil 1 befindet sich in der Ausgangsposition.

Optional kann an dieser Stelle auch die zweite Werkzeughälfte 5 mit einem weiteren Einlegteil bestückt werden. Die Kunststoffplatte 3 wird mit Hilfe von Vakuum in die erste Werkzeughälfte 2, welche die äußere Bauteilgeometrie abbildet, eingesaugt.

Um den für den Formschluss notwendigen Raum hinter der Hinterschneidung des Einlegteiles 1 mit Kunststoff zu füllen, ist das Einlegteil 1 in der ersten Werkzeughälfte 2 auf einer beweglichen Aufnahme 7 positioniert. Durch Anheben des Bauteils und den beispielsweise gleichzeitigen Einsatz von Vakuum und/oder Schiebern 4 wird der Raum hinter der Hinterschneidung des Bauteiles gefüllt - Fig. 3 und Fig. 4.

Im nächsten Schritt (Fig. 5) wird die zweite Werkzeughälfte 5 mit einer definierten Schließkraft auf die erste Werkzeughälfte 2 abgesenkt und die innere Kontur des Bauteiles abgebildet. Im Zuge dieses Prozessschrittes kann das Einlegeteil 1 gegebenenfalls wieder in die Ausgangsposition gebracht werden. Dadurch wird der Kunststoff hinter den Hinterschneidungen zusätzlich verpresst und der Formschluss zwischen Einlegeteil 1 und Kunststoff der ersten Kunststoffplatte 3 erhöht.

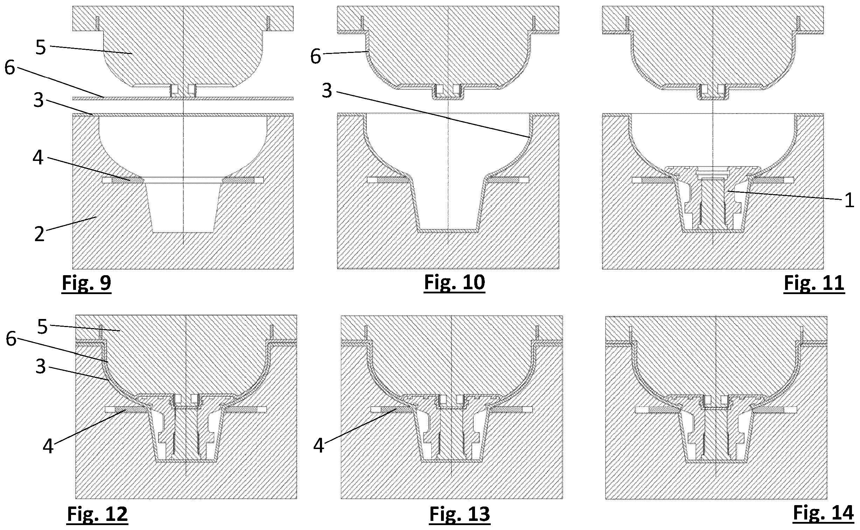

Eine alternative Ausführung des Herstellungsverfahrens zeigen die Fig. 9 bis Fig. 14, nämlich ein Twinsheet-Verfahren zur Herstellung der Halbschale.

Im ersten Schritt des Twinsheet-Verfahrens werden beide Werkzeughälften 2, 5 mit jeweils einer vorgeheizten Kunststoffplatte 3, 6 bestückt (Fig. 9). Optional kann an dieser Stelle auch die zweite Werkzeughälfte 5 mit einem Einlegeteil bestückt werden. Die Kunststoffplatten 3, 6 werden mit Hilfe von Vakuum in bzw. an die jeweiligen Werkzeughälften 2, 5 gesaugt, welche die äußere bzw. innere Bauteilgeometrie abbilden (Fig. 10).

Im nächsten Schritt wird in die erste Werkzeughälfte 2 das zu umschließende Einlegeteil 1 eingelegt (Fig. 11).

Mit Hilfe von Vakuum und/oder Schiebern 4 wird der Raum hinter der für den Formschluss notwendigen Hinterschneidung des Einlegeteiles 1 mit Kunststoff gefüllt (Fig. 12). Das überschüssige Material wird durch in das Werkzeug eingebrachten Schneidkanten hinter der Hinterschneidung abgetrennt (Fig. 13). Diese Schneiden können, wie in Fig. 13, auch in den Schiebern 4 enthalten sein. Fig. 14 zeigt das fertige Bauteil, wobei der überschüssige Kunststoff, unterhalb der Hinterschneidung und der Schieber 4, abgetrennt ist.

### Bezugszeichenliste

- 1: Einlegeteil
- 2: erste Werkzeughälfte
- 3: erste Kunststoffplatte
- 4: Schieber
- 5: zweite Werkzeughälfte
- 6: zweite Kunststoffplatte
- 7: Aufnahme

## Patentansprüche

1. Verfahren zur Herstellung einer Halbschale für einen Hochdruckbehälter, wobei die Halbschale einen Einlegeteil (1) umfasst, wobei ein Werkzeug verwendet wird mit einer ersten Werkzeughälfte (2) die eine Matrize bildet, umfassend die Schritte:
- eine vorgeheizte erste Kunststoffplatte (3) wird auf die erste Werkzeughälfte (2) gelegt,
- die erste Kunststoffplatte (3) wird mittels Unterdruck oder Druck an die erste Werkzeughälfte (2) gesaugt oder gepresst,
- hierdurch wird der Kunststoff der ersten Kunststoffplatte (3) bereichsweise hinter einer Hinterschneidung des Einlegeteils (1) seitlich beabstandet vom Einlegeteil (1) angeordnet, oder das Einlegeteil (1) wird nach dem Saugen oder Pressen der ersten Kunststoffplatte (3) an die erste Werkzeughälfte (2) so positioniert, dass Kunststoff der ersten Kunststoffplatte (3) bereichsweise hinter einer Hinterschneidung des Einlegeteils (1) seitlich beabstandet vom Einlegeteil (1) angeordnet ist,
- danach wird mittels eines Schiebers (4) oder eines Unterdrucks oder eines Drucks der Kunststoff der ersten Kunststoffplatte (3) hinter der Hinterschneidung von seitlich beabstandet des Einlegeteils (1) an das Einlegeteil (1) gedrückt oder gesaugt, so dass ein Raum hinter der Hinterschneidung des Einlegeteils (1) mit dem Kunststoff gefüllt wird, **dadurch gekennzeichnet, dass** das Einlegeteil (1), nach dem Saugen oder Pressen der ersten Kunststoffplatte (3) an die erste Werkzeughälfte (2), in Relation zur ersten Werkzeughälfte (2) angehoben wird, um das Einlegeteil (1) so zu positionieren, dass Kunststoff der ersten Kunststoffplatte hinter der Hinterschneidung seitlich beabstandet vom Einlegeteil (1) angeordnet wird, wobei das Einlegeteil (1) nach dem Füllen der Hinterschneidung des Einlegeteils (1) mit dem Kunststoff wieder abgesenkt wird in Relation zur ersten Werkzeughälfte (2).

2. Verfahren nach Anspruch 1,
**dadurch gekennzeichnet, dass** das Werkzeug eine zweite Werkzeughälfte (5) umfasst, die einen Stempel bildet und die zweiten Werkzeughälfte (5) auf die erste Werkzeughälfte (2) gefahren wird, um die innere Kontur der Halbschale auszubilden.

3. Verfahren nach zumindest einem der vorhergehenden Ansprüche,
**dadurch gekennzeichnet, dass** eine vorgeheizte zweite Kunststoffplatte (6) auf die zweite Werkzeughälfte (5) gelegt wird, danach die zweite Kunststoffplatte (6) mittels Unterdruck oder Druck an die zweite Werkzeughälfte (5) gesaugt oder gepresst wird, und die zweite Werkzeughälfte (5) mit der zweiten Kunststoffplatte (6) auf die erste Werkzeughälfte (2) gefahren wird um die innere Kontur der Halbschale auszubilden.

4. Verfahren nach zumindest einem der vorhergehenden Ansprüche,
**dadurch gekennzeichnet, dass** die erste Kunststoffplatte (3) ein Mehrschichtverbund ist, wobei der Mehrschichtverbund bevorzugt eine Schicht aus HDPE und eine Barriereschicht, insbesondere EVOH, umfasst.

5. Verfahren zur Herstellung eines Hochdruckbehälters, wobei eine Halbschale hergestellt wird durch ein Verfahren nach zumindest einem der vorhergehenden Ansprüche, wobei die Halbschale mit einer weiteren Halbschale oder mit mindestens einem Zylinder und einer Endkappe verbunden wird, um einen geschlossenen Behälter zu bilden.

6. Verfahren nach Anspruch 5,
**dadurch gekennzeichnet , dass** der geschlossene Behälter mit einem Fasermaterial umwickelt wird, bevorzugt mit einem Verbundwerkstoff umfassend Kohlefasern und/oder Glasfasern und/oder Epoxidharz.

## Claims

1. Method for producing a half-shell for a high-pressure vessel, in which the half-shell comprises an insert (1) and in which a mould is used having a first mould part (2) which forms a female mould, comprising the following steps:
- a pre-heated first plastics sheet (3) is laid on the first mould part (2),
- the first plastics sheet (3) is sucked by means of a partial vacuum or pressed by a pressure onto the first mould part (2),
- the plastic of the first plastics sheet (3) is thereby disposed in areas behind a back-taper of the insert (1) at a lateral distance from the insert (1), or the insert (1) after sucking or pressing of the first plastics sheet (3) onto the first mould part (2) is so positioned that plastic of the first plastics sheet (3) is disposed in areas behind a back-taper of the insert (1) at a lateral distance from the insert (1).
- then by means of a slide (4) or a partial vacuum or a pressure, the plastic of the first plastics sheet (3) behind the back-taper and laterally distanced from the insert (1) is pressed or sucked onto the insert (1), so that a space behind the back-taper of the insert (1) is filled with the plastic, **characterized in that** after sucking or pressing the first plastics sheet (3) onto the first mould part (2), the insert (1) is raised in relation to the first mould part (2), in order to position the insert (1) so that plastic of the first plastics sheet is disposed behind the back-taper at a lateral distance from the insert (1), wherein after filling the back-taper of the insert (1) with the plastic the insert (1) is lowered again in relation to the first mould part (2).

2. Method according to Claim 1,
**characterized in that** the mould comprises a second mould part (5), which forms a male mould, and the second mould part (5) is run onto the first mould part (2), in order to form the internal contour of the half-shell.

3. Method according to at least one of the preceding claims,
**characterized in that** a pre-heated second plastics sheet (6) is laid on the second mould part (5), following which the second plastics sheet (6) is sucked by means of a partial vacuum or pressed by means of a pressure onto the second mould part (5), and the second mould part (5) with the second plastics sheet (6) is run onto the first mould part (2) in order to form the internal contour of the half-shell.

4. Method according to at least one of the preceding claims,
**characterized in that** the first plastics sheet (3) is a multilayer composite, in which the multilayer composite preferably comprises a layer of HDPE and a barrier layer, in particular EVOH.

5. Method for producing a high-pressure vessel, in which a half-shell is produced by a method according to at least one of the preceding claims, in which the half-shell is connected to a further half-shell or to at least one cylinder and an end cap, in order to form a closed vessel.

6. Method according to Claim 5,
**characterized in that** the closed vessel is wrapped with a fibre material, preferably with a composite material comprising carbon fibres and/or glass fibres and/or epoxy resin.

## Revendications

1. Procédé de fabrication d'une demi-coque pour un récipient à haute pression, la demi-coque comprenant une pièce d'insertion (1), un outil étant utilisé avec une première moitié d'outil (2) qui forme une matrice, comprenant les étapes suivantes :
- une première plaque de matière plastique préchauffée (3) est placée sur la première moitié d'outil (2),
- la première plaque de matière plastique (3) est aspirée ou pressée contre la première moitié d'outil (2) au moyen d'une dépression ou d'une pression,
- moyennant quoi la matière plastique de la première plaque de matière plastique (3) est agencée par zones derrière une contre-dépouille de la pièce d'insertion (1), à une distance latérale de la pièce d'insertion (1), ou la pièce d'insertion (1) est positionnée après l'aspiration ou le pressage de la première plaque de matière plastique (3) contre la première moitié d'outil (2) de telle sorte que la matière plastique de la première plaque de matière plastique (3) est agencée par zones derrière une contre-dépouille de la pièce d'insertion (1) à une distance latérale de la pièce d'insertion (1),
- ensuite, au moyen d'un poussoir (4) ou d'une dépression ou d'une pression, la matière plastique de la première plaque de matière plastique (3) est pressée ou aspirée contre la pièce d'insertion (1) derrière la contre-dépouille depuis une distance latérale de la pièce d'insertion (1), de telle sorte qu'un espace derrière la contre-dépouille de la pièce d'insertion (1) est rempli de la matière plastique, **caractérisé en ce que**
la pièce d'insertion (1), après l'aspiration ou le pressage de la première plaque de matière plastique (3) contre la première moitié d'outil (2), est soulevée par rapport à la première moitié d'outil (2) afin de positionner la pièce d'insertion (1) de telle sorte que la matière plastique de la première plaque de matière plastique est agencée derrière la contre-dépouille à une distance latérale de la pièce d'insertion (1), la pièce d'insertion (1) étant à nouveau abaissée par rapport à la première moitié d'outil après le remplissage de la contre-dépouille de la pièce d'insertion (1) avec la matière plastique.

2. Procédé selon la revendication 1, **caractérisé en ce que** l'outil comprend une deuxième moitié d'outil (5) formant un poinçon et la deuxième moitié d'outil (5) est déplacée sur la première moitié d'outil (2) afin de former le contour intérieur de la demi-coque.

3. Procédé selon au moins l'une quelconque des revendications précédentes, **caractérisé en ce qu'**une deuxième plaque de matière plastique préchauffée (6) est placée sur la deuxième moitié d'outil (5), ensuite, la deuxième plaque de matière plastique (6) est aspirée ou pressée contre la deuxième moitié d'outil (5) au moyen d'une dépression ou d'une pression, et la deuxième moitié d'outil (5) avec la deuxième plaque de matière plastique (6) est déplacée sur la première moitié d'outil (2) afin de former le contour intérieur de la demi-coque.

4. Procédé selon au moins l'une quelconque des revendications précédentes, **caractérisé en ce que** la première plaque de matière plastique (3) est un composite multicouche, le composite multicouche comprenant de préférence une couche de PEHD et une couche barrière, en particulier EVOH.

5. Procédé de fabrication d'un récipient à haute pression, une demi-coque étant fabriquée par un procédé selon au moins l'une quelconque des revendications précédentes, la demi-coque étant reliée à une autre demi-coque ou à au moins un cylindre et un capuchon d'extrémité afin de former un récipient fermé.

6. Procédé selon la revendication 5, **caractérisé en ce que** le récipient fermé est enveloppé d'un matériau fibreux, de préférence d'un matériau composite comprenant des fibres de carbone et/ou des fibres de verre et/ou une résine époxy.
